# EUROPEAN PATENT SPECIFICATION

(11) **EP 3 216 715 B1**
(45) Date of publication and mention of the grant of the patent: **01.05.2019**
(21) Application number: 17159601.8
(22) Date of filing: 07.03.2017
(51) Int. Cl.: B65D 63/10, F16L 3/137, B60P 7/08, F16L 3/233, B29D 29/00, B29C 47/00, B29D 99/00

(54) **ANNULAR ELASTIC BAND FOR RETAINING OBJECTS AND PROCESS FOR MAKING SAID ELASTIC BAND**
RINGFÖRMIGES ELASTISCHES BAND ZUM HALTEN VON GEGENSTÄNDEN UND VERFAHREN ZUR HERSTELLUNG DIESER ELASTISCHEN BANDES
BANDE ÉLASTIQUE ANNULAIRE PERMETTANT DE RETENIR DES OBJETS ET PROCÉDÉ DE FABRICATION DE LADITE BANDE ÉLASTIQUE

(30) Priority: 07.03.2016 IT UA20161433
(43) Date of publication of application: 13.09.2017
(73) Proprietor: PLASTOTECNICA S.P.A., 35023 Bagnoli di Sopra (PD) (IT)
(72) Inventor: DALLA PRIA, Michele, I-35042 Este (PD) (IT)
(74) Representative: Gallo, Luca

(56) References cited:
- EP-A1- 0 135 113
- WO-A1-96/24535
- WO-A1-2011/068925
- US-A- 2 203 822

## Description

### Field of application

The present invention regards an annular elastic band for retaining objects and a process for making said elastic band, according to the preamble of the respective independent claims.

The present band and process are intended to be employed in the logistics processes of transportation and storage of goods, for example for movement on pallets by means of specific equipment such as forklifts, pallet jacks or trucks.

The annular elastic band produced by means of the process, object of the present invention, is intended to be advantageously wound around objects such as goods, products, packages of any nature, any shape and size, fixing, securing and retaining such objects in the desired position, even in case of intense vibrations and stresses, so as to be particularly suitable for being used in the field of logistics between industrial and commercial situations.

The invention is therefore inserted in the context of the industrial field of storage, logistics and transport, or in the field of production of objects made of plastic material film.

### State of the art

As is known, annular elastic bands for retaining products, constituted by a film made of elastically deformable plastic material, are diffused on the market; such bands are adapted to prevent the undesired fall of objects during transport or the alteration of the configuration of a load. An annular elastic band of the above-described type is for example described in the patent EP 0672592.

In operation, such known annular elastic band is susceptible of being extended by means of a traction force, usually manually actuated, aimed to bring it into an elastically extended and deformed condition. Once such condition is attained, the band can be released around the products to be retained in order to impact against them, integrally compacting them together, or stably retaining them in an assembled condition.

The patent application WO 96/24535 describes another elastic band of the known type for holding objects, which is composed of two tape-like bands, each of which is provided at its ends with junction flaps that are fixed to the junction flaps of the other tape-like band.

Elastic bands of this known type can be employed for retaining products of various nature since they can be extended within a limit of extension of the ring, corresponding with the attainment of the maximum limit of elasticity of the material constituting the film of the band (yield point). If such limit is exceeded, the mechanical properties of the elastic band are irreparably compromised, since the latter loses its elasticity and hence the possibility to exert an elastic retention force on the products to be assembled.

One drawback of the elastic bands of known type, that currently have greater presence on the market, lies in the high longitudinal elongation that the bands still allow even after having exceeded the yield point, i.e. after the limit in which the plastic material film starts to be plastically deformed, with irreversible elongation deformations that do not return to previous form once the traction force has ceased.

In other words, the annular elastic bands of known type are susceptible of having a high elongation in the direction of extension of the ring, even after having lost all the elastic properties.

Such high elongation involves the drawback of using, in practice, the aforesaid elastic bands even beyond their yield point, with the consequence that the products wound by the elastic band are no longer assembled together with a suitable elastic retention force.

A further drawback of the elastic bands of known type lies in their low mechanical resistance to perforation, i.e. with respect to point pressures orthogonal to the lying plane of the plastic film that constitutes the band itself. Consequently, the annular elastic bands of known type have low resistance to perforation and, during use, are frequently subject to perforations that can give rise to more or less extensive tearing which entirely or partly compromises the retention functions of the band.

### Presentation of the invention

In this situation, the problem underlying the present invention is therefore that of remedying the drawbacks manifested by the annular elastic bands of known type, by providing an annular elastic band for retaining objects which has improved mechanical performances and in particular a low elongation after the yield point.

A further object of the present invention is to provide an annular elastic band for retaining objects that is highly reliable, even in the case of strong and mechanical stresses.

A further object of the present invention is to provide an annular elastic band for retaining objects that is particularly resistant to perforation stresses.

A further object of the present invention is to provide an annular elastic band for retaining objects that is simple and practical to use.

A further object of the present invention is to provide a process for making an annular elastic band that is inexpensive to make.

A further object of the present invention is to provide a process for making an annular elastic band that does not involve difficult modifications of the standardized processes that are already available for making continuous films of plastic material.

### Brief description of the drawings

The technical characteristics of the finding, according to the aforesaid objects, can be clearly seen in the contents of the below-reported claims and the advantages thereof will be clearer in the following detailed description, made with reference to the enclosed drawings, which represent a merely exemplifying and non-limiting embodiment, in which:

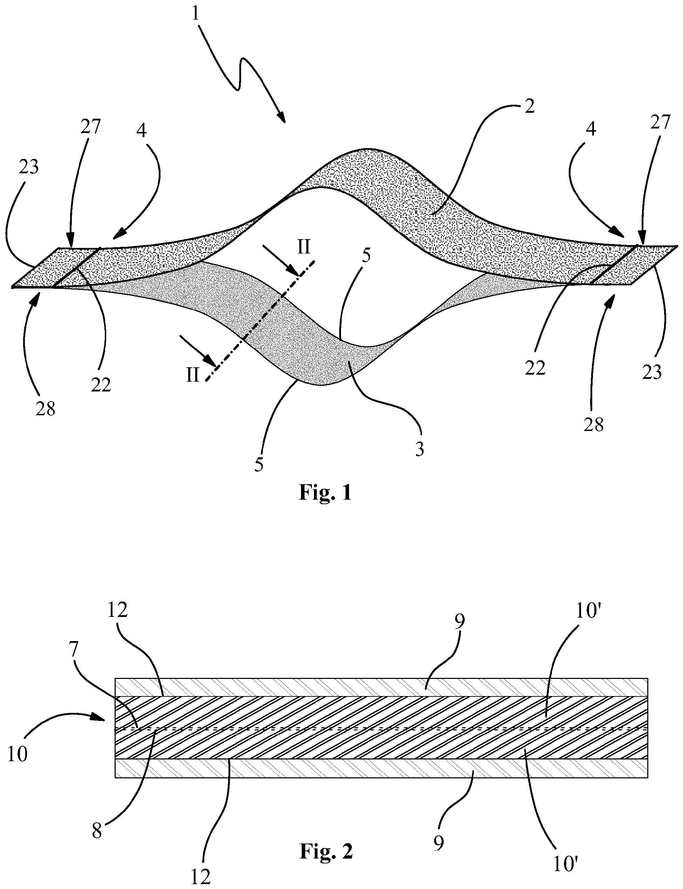

- Fig. 1 shows a perspective overall view of the annular elastic band for retaining objects, according to the present invention;
- Fig. 2 shows a cross section of the annular elastic band according to trace II-II of figure 1;
- Fig. 3 shows a scheme of the main steps of the process for making an annular elastic band for retaining objects according to the invention;
- Fig. 4 shows a step of the process for making the elastic band according to the invention relative to a step of forming a tubular film represented in a cross section according to trace III-A - III-A of figure 3;
- Fig. 5 shows the tubular film of figure 4 after a flattening step and before a stripping step of the process for making the elastic band according to the invention in a cross section view according to trace III-B - III-B of figure 3;
- Fig. 6 shows a step of the process for making the elastic band according to the invention relative to a step of longitudinal cutting of a reel of wound film, in a succession of continuous elastic bands of different widths connected together by weakening lines;
- Fig. 7 shows an enlarged detail of figure 2 through an electron microscope image of the joining zone between two substrates of each of the two tape-like bands.

### Detailed description of a preferred embodiment

With reference to the enclosed drawings, reference number 1 overall indicates an annular elastic band for retaining objects, according to the present invention.

The present elastic band 1 is intended to be advantageously employed for retaining products of different nature and size assembled together, in accordance with the use destinations. In operation, it is intended to be wound around goods, products and packages of any nature, any shape and size in order to secure and retain them in the desired position, even in case of vibrations and stresses. The band according to the invention is therefore particularly suitable for being used in the field of logistics and transportation between industrial and commercial situations.

In particular, the present annular elastic band 1 allows retaining objects assembled together even in case of transportation over rough terrain, or in case of transportation of particularly delicate objects, for which it is necessary to have the maximum assurance regarding the maintenance of the original load position. In addition, the present annular elastic band 1 also allows retaining relatively sharp objects, capable therefore of exerting high point pressures on the band 1 during the transport thereof, without risking perforation of the band 1 itself.

More in detail, the annular elastic band 1 according to the present invention is obtained as a film of flexible, deformable and elastic plastic material, e.g. a polyolefin. According to the idea underlying the present invention, the elastic band 1 consists of at least two elongated tape-like bands 2, 3 joined together at their ends so as to make the band 1 assume the aforesaid annular shape.

Each of the two bands 2, 3 has elongated shape, substantially rectangular, and is provided at its two ends with junction flaps respectively indicated with 27 and 28, which are superimposed on and fixed to the junction flaps 27, 28 provided at the ends of the other band. Therefore, the junction flaps 27 of one band 2 are superimposed on and joined to the junction flaps 28 of the other band 3 by means of fixing means 4, advantageously constituted by welds, thus in order to form the shape of a closed ring. With the term junction flap 27, 28 it must be intended a terminal section of the band 2, 3, i.e. placed at its ends and preferably of extension comprised in the interval between several millimeters and several centimeters, and preferably between 1-40 mm.

Each band 2, 3 preferably has rectangular form and hence has two longer longitudinal sides 5, which are extended in a main extension direction of the plastic film, and two shorter transverse sides, which are extended orthogonally with respect to, and joining, the longer longitudinal sides 5, and which delimit the ends of the band 2, 3, i.e. its junction flaps 27, 28.

Each of the two elongated tape-like bands 2, 3 of the annular elastic band 1 is composed of at least three layers of plastic material that are superimposed on each other.

More in detail, two first external layers 9 are provided as well as a second internal layer 10, interposed between the two external layers 9.

Each external layer 9 has smaller thickness than the thickness of the second internal layer 10 and is obtained in a first plastic material, preferably extrudable.

As described hereinbelow, such first plastic material has the advantage of having a very low adhesiveness, which allows handling the annular elastic band 1 in its steps of production starting from a continuous tubular film, as better described hereinbelow with reference to the production process, without such material adhering in an undesired manner to rollers or other provided supports of the equipment used in the production process.

Such material in fact has a low adherence capacity, even with the increase of temperature and/or decrease of the density, or even at relatively high temperatures.

In turn, the second internal layer 10 of each band 2, 3 of the elastic band 1, which as stated has greater thickness than the thickness of the two contiguous first external layers 9, is obtained in a second plastic material, preferably extrudable.

The material constituting the second internal layer 10 is advantageously selected in order to confer the desired mechanical properties of elasticity and strength to the elastic band 1.

Preferably, the second internal layer 10 of each band 2, 3 of the elastic band 1 is formed by two superimposed polymer substrates 10', closely joined together by means of penetration of the polymer chains of each substrate 10' with the polymer chains of the other substrate 10'.

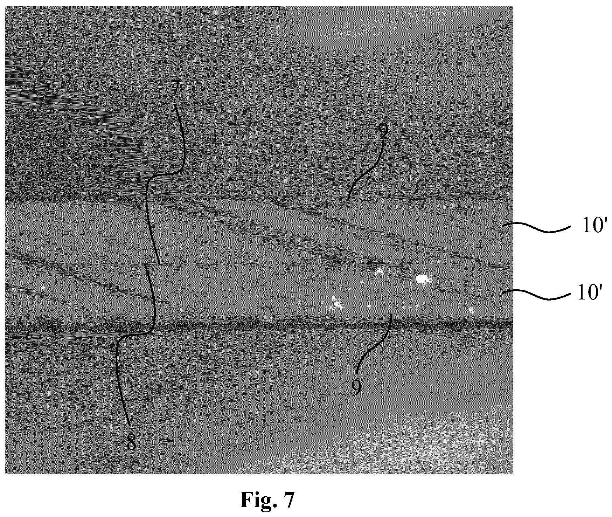

Such substrates 10' with penetrated polymer chains remain distinguishable from each other, as can be appreciated in the electron microscope image of figure 7.

The single chains are readable as polymer chains penetratingly projecting into the adjacent substrate 10', from a surface clearly recognizable through the electron microscope.

In particular, as will be better specified hereinbelow in the discussion of the production process, such joining of the two substrates 10' occurs via compression by means of a collapse of the same substrates 10', one in the other, by means of pressing during the production process and in particular during a provided step for flattening a tubular film obtained via bubble extrusion.

Still more in detail, each substrate 10' of the second internal layer 10 of each band 2, 3 is provided with a first face 12, which is inseparably joined to one of the two first external layers 9, by means of joining obtained during a step of co-extrusion described hereinbelow, and a second face 7, which is closely and inseparably adhered to the second face 8 of the second substrate 10', by means of collapse of the two substrates 10', one in the other, attained during a flattening step of the production process described hereinbelow.

With the term first plastic material, which composes the two first external layers 9, it must be intended hereinbelow a polymer material, in particular a polyolefin and preferably a linear low-density polyethylene.

More particularly, such polyolefin is advantageously catalyzed by a metallocene.

More particularly, in addition, such first plastic material can for example be constituted by an α-olefin catalyzed by a metallocene, in particular a linear low-density polyethylene catalyzed by a metallocene (mLLDPE), in particular a hexene mLLDPE (C6 LLDPE). Nevertheless, the man skilled in the art of the field will be able to employ plastic materials having elastic and mechanical properties similar to those of the above-indicated materials.

In addition, preferably, such first plastic material must be intended as having a density that is preferably greater than the second plastic material of the second internal layer 10, and in particular a density greater than 0.908 g/cm³ and more particularly greater than 0.91 g/cm³. Such selection conditions those extrudable materials capable of being handled in the normal production processes without risking an excessive adhesion to the rollers or to other means that handle them.

In addition, preferably, such first plastic material also has a preferably high viscosity, more in detail preferably having a melt flow index (MFI) comprised between 0.3 g/10min and 1.5 g/10min.

In turn, with the term second plastic material, which constitutes the second internal layer 10, it must be intended hereinbelow a polymer material, in particular a polyolefin, more particularly an α-olefin such as a polyethylene and/or a polypropylene. In particular such second plastic material can preferably comprise a linear low-density polyethylene (LLDPE), in particular an octene LLDPE (C8 LLDPE). Nevertheless, without departing from the scope of the present patent, plastic materials analogous to those described above can be used, for example polyurethanes, and/or esters deriving from acrylic acid. Copolymers can also be used which at least partly comprise the above-listed materials and/or polystyrene and/or butadiene.

In addition, preferably, such second plastic material of the second internal layer 10 must be intended as having a smaller density than the first plastic material of the first external layers 9, and in particular with a density smaller than 0.91 g/cm³ and more particularly smaller than 0.908 g/cm3.

In addition, the second plastic material constituting the second internal layer 10 is to be intended a polymer material having a viscosity defined by a melt flow index (MFI) preferably comprised between 0.5 g/10min and 4 g/10min.

The density and MFI characteristics just described confer high adhesive properties to the second plastic material which constitutes the second internal layer 10.

The density and MFI characteristics of the aforesaid second plastic material render it particularly adhesive, also at limited processing temperatures (in particular less than 70°C) and suitable for collapse during a flattening step which will be described hereinbelow.

More in detail, the polymer of the second internal layer 10 of each elongated tape-like band 2, 3 of the annular elastic band 1 has polymer chains at the second superimposed faces 7, 8 of the first and second substrate 10' closely bonded together via collapse of the two substrates, one on the other.

In accordance with the embodiment illustrated in the enclosed figures, two bands 2, 3 have been provided, each composed of at least three layers; nevertheless, without departing from the protective scope of the present patent, multiple superimposed bands can be provided for, each composed of three or even more layers.

The annular elastic band 1, object of the present invention, thus achieved, has surprising mechanical performances. In particular, in the enclosed table A, the values of mechanical properties are indicated for the above-described embodiment, obtained with laboratory tests using two annular elastic bands 1, one having total thickness that is double that of the other.

Of particular interest, for the object of the present invention, are the values reported in the enclosed table A relative to the specific loads applicable along the direction of annular extension on the elastic band 1, without reaching complete breakage of the same band 1, as well as the values relative to the specific load that can be exerted on the annular elastic band 1 before reaching perforation. Such values denote a surprising capacity of the band 1 according to the present invention to support considerable mechanical stresses and loads.

Advantageously, the annular elastic band 1, object of the present invention, has a low maximum elongation percentage. The limited elongation allows the elastic band 1 to maintain constant over time the force of compression which is achieved at the time of its application around the products to be retained, without involving irreversible plastic deformations. Such mechanical characteristic constitutes a substantial improvement of the capacity to safely retain the products with respect to the bands currently present on the market.

The mechanical performances of the elastic band 1 according to the invention are surprising in particular in light of the comparative tests conducted on elastic bands, not the object of the present invention, and having the same total thickness as the elastic bands 1 according to the invention but comprising four superimposed tape-like bands, rather than the two of the invention, hence each composed of two layers of plastic material in accordance with the first and second plastic material of the elastic band 1 according to the invention and described above. Such four bands are separated from each other and do not comprise, contrary to the present invention, an internal layer 10 formed by the collapse of two polymer substrates 10'.

In the enclosed table B, the values of the mechanical characteristics of the abovementioned second elastic bands are reported. Of particular interest is the comparison of the perforation resistance performances: the elastic band 1, object of the present invention, has an overall resistance to stresses orthogonal to the annular extension direction that is surprisingly greater, able to sustain stresses to break having much higher energy, even if as stated the bands overall have equal thickness.

In addition, given the same elastic recovery, the elastic band 1, object of the present invention, has lower maximum elongation. This characteristic indicates a capacity to maintain substantially constant over time the shape that it assumes, with a reduced elongation after the aforesaid yield point. Therefore, the elastic band 1 according to the invention is advantageously able to oppose the movement of the objects to be assembled even after having lost its elastic properties.

Also forming the object of the present invention is a process for making an annular elastic band 1 for retaining objects of the above-described type, and hereinbelow for the sake of simplicity the same reference nomenclature will be employed.

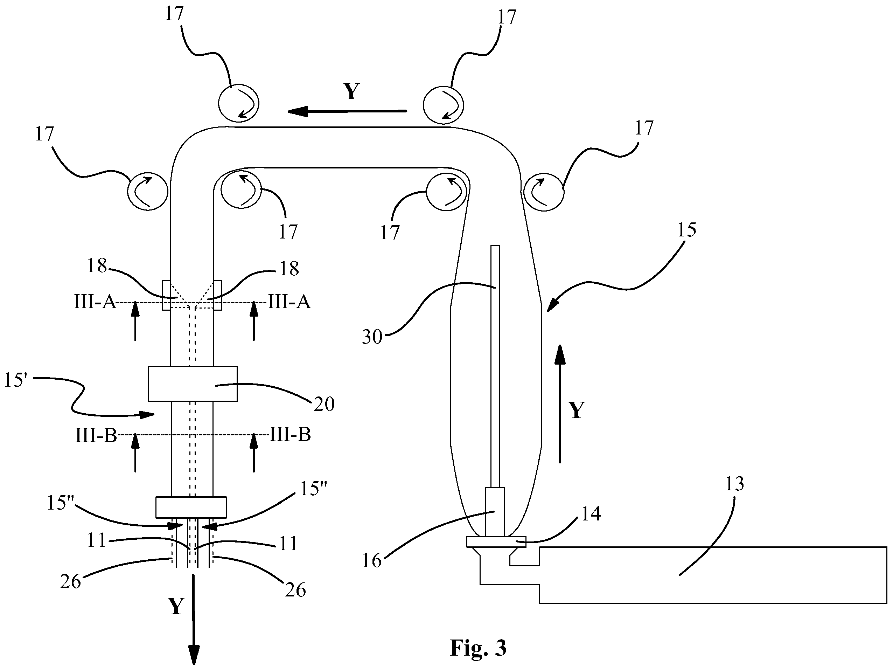

The process according to the invention is illustrated in its main steps in the enclosed figure 3 and comprises the operating steps described hereinbelow, which lead to the achievement of an annular elastic band 1 for retaining objects of the above-described type.

The plastic material which will come to compose the film is stored in a *per se* conventional manner in silos or collection containers, from which by means of transport means - for example suction tubes - it is sent to the co-extrusion head of a bubble co-extrusion plant. More in detail, the plant provides for heating the plastic material until it is melted or softened so as to make it assume the desired viscosity, in order to make it assume a preferably pasty consistency. Consequently, the melted material in pasty form is forced by pressure means 13, for example obtained with a worm screw (simple or double), towards the co-extrusion head 14, which has an outlet mouth with circular shape. In particular, the co-extrusion head simultaneously receives at least two different plastic materials, which exit from the circular extrusion head 14 coupled together and cohesive on each other, in a *per se* known manner and hence not described in detail.

The plastic material pushed outside the co-extrusion head 14 forms a continuous cylindrical film with central cavity; at the center of such cavity, pressurized air is advantageously introduced by means of at least one central tube 16, having the purpose of inflating the film in cylindrical form and checking the temperature thereof; the air introduced into the continuous cylindrical film is suctioned by at least one elongated tube 30, advantageously coaxial with the central tube, which is extended height-wise for most of the cylindrical film in order to suction the introduced air after it has achieved its purpose of inflating the melted and cooled plastic material exiting from the extrusion head 14.

The plastic material film pushed by the pressure of the air therefore assumes, at the outlet of the mouth of the co-extruder, the shape of a cylindrical tube indicated hereinbelow with reference number 15, which advances with advancement direction indicated with Y.

Hereinbelow, Y indicates the advancement direction of the film in each transformation step thereof, even if the film assumes different forms and is referred to with different expressions.

In accordance with the present invention, the co-extrusion head of a bubble extrusion plant is fed with at least two different plastic materials.

In this manner, the tubular film 15 exiting from the co-extrusion mouth is composed of an external layer 9 of the first plastic material described above, and of an internal substrate 10' of the second plastic material, also described above.

The overall thickness of the tubular film 15 produced by the bubble co-extrusion plant, advantageously checked by at least one electronic meter (e.g. through a capacitive electrical measurement), is preferably comprised between 6 µm and 300 µm.

Exiting from the co-extrusion mouth, the film in tubular form 15, obtained in the at least two abovementioned layers, is guided and transported in a *per se* known manner by means of counter-rotating rollers 17 arranged outside the tubular film 15.

In accordance with the idea underlying the present invention, a forming step is then provided for, in which the continuous film in tubular form 15 is deformed by means of interception of at least one forming wedge 18, in order to make it assume the shape of a continuous shaped film having at least one concavity 19 externally delimited by at least two bends 29 and internally provided with a middle vertex 31 at the middle axis of the same concavity 19.

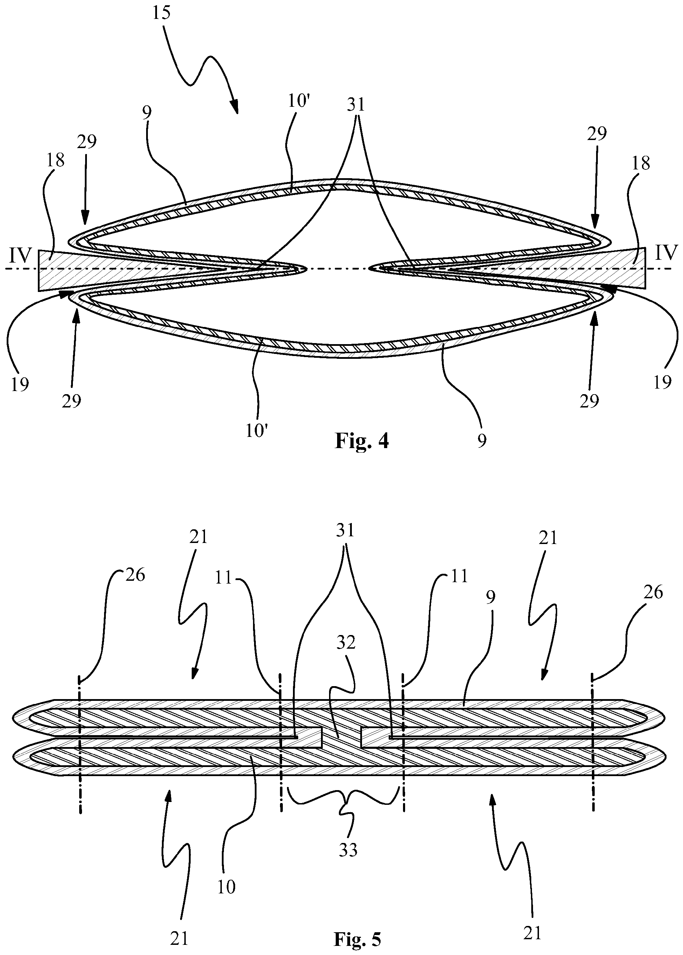

In accordance with the preferred embodiment illustrated in the enclosed figures and described hereinbelow, two forming wedges 18 are provided that are arranged to intercept the continuous tubular film 15 at two diametrically opposite positions. Such forming wedges are correspondingly adapted to form two opposite lateral concavities 19, making the tubular film assume a bellows conformation schematized in figure 4, with four lateral bends 29 and two vertices 31 of the concavities 19 centrally approached each other.

Hereinbelow, reference will be made, in accordance with the enclosed figures, to the process embodiment with two forming wedges 18, it being intended *mutatis mutandis* that the same statements also hold true if a single forming wedge 18 is present.

Following the forming step, a flattening step is provided in which the tubular film 15, having, as stated, the two opposite concavities 19 and the four bends 29, is forced to pass into the slit delimited between two counter-rotating rollers 20, so as to make it assume a flattened continuous tape form 15'.

Due to the presence of the four bends 29, the internal substrates 10' are situated directed against each other so as to be pressed against each other during the hot flattening step, being joined together and forming two pairs of superimposed parallel and side-by-side continuous strips 21. Each strip 21 is then formed by two external layers 9 and by an internal layer 10 obtained from the close adhesion of two internal superimposed substrates 10'. The strips 21 obtained after the flattening step substantially form a configuration having a horizontal H-shaped section, in accordance with that illustrated in figure 5, which represents a schematic section obtained along the plane III-B illustrated in figure 3.

The strips 21 are laterally connected to each other by means of the bends 29 and centrally at the middle line by means of a joining rib 32 delimited by the vertices 31 of the concavities 19.

More in detail, during the flattening step, the internal substrate 10' constituted by the second polymer material has adhesive properties due mainly to the pasty consistency (qualified by density and viscosity as considered above) which makes it suitable for collapse. Preferably, the flattening step occurs in a temperature range comprised between 30°C and 60 °C, which facilitates the aforesaid collapse.

Therefore, when during the flattening step this is hot compressed against an opposite internal substrate 10', a collapse of the two substrates 10' takes place along with a close adhesion thereof.

Where it is indicated that the two internal substrates 10' collapse by means of compression, one in the other, it must be intended that their surface polymer chains are partially penetrated, attaining a single internal layer 10 of double thickness in which the two substrates 10' are strongly adhered to each other. The passage through the rollers 20 in the flattening step in fact forces the polymer chains of the second plastic material of an internal substrate 10' to be closely bonded with the chains of the opposite internal substrate 10'.

The flattening step therefore involves the collapse of the two internal substrates 10' and the formation of a single internal layer 10.

The adhesive characteristics of the material constituting each substrate 10', facilitated by the selection of the material and by the temperature, ensure that during the flattening step the compression force transmitted by the rollers 20 causes, as stated, the close adhesion of the two substrates 10'.

During the flattening step, there is then the formation of a continuous tape 15' formed by two or more strips 21 in turn externally composed of layers 9 of the first non-adherent plastic material, which is thus easily transportable and able to be handled in subsequent processing, and internally has the layer 10 of the second plastic material composed of the close adhesion of two facing internal substrates 10' of the same material.

Subsequently, the manufacturing process provides for a central stripping step, in which the flattened tubular film 15 in tape form 15' is cut at its middle axis along two first cutting lines 11, in a manner such to separate a central scrap 33, at the abovementioned joining rib 32 delimited by the vertices 31 of the concavities 19, from the four continuous strips 21, two-by-two superimposed.

In this manner, the continuous tape 15' that exits from the flattening step is divided due to the aforesaid step of central stripping into four continuous strips 21 of plastic film, two-by-two superimposed and laterally connected to each other by means of the bends 29. Such four continuous strips 21, two-by-two superimposed, are then preferably subjected to a step of lateral stripping in which they are cut along two second lateral cutting lines 26 at the external edges of the aforesaid continuous strips 21, in accordance with that represented in figure 5, in a manner so as to form continuous parallel bands 15" that are superimposed on and separated from each other, as well as of desired width and with the edges well-defined by the stripping operations.

Each continuous band 15" thus obtained is separated from the others and advantageously has an overall thickness comprised between 6 µm and 300 µm.

The two stripping steps can of course be reversed without departing from the protective scope of the present patent.

In addition, in the case of the abovementioned embodiment in which the forming step provides for the use of a single forming wedge 18, the forming of a single concavity 19 will be provided in the tubular film profile 15 that advances, and such concavity still remains delimited by two lateral bends 29. In this case, during the subsequent flattening step, there is the attainment of only two continuous parallel strips 21 that are superimposed on each other.

Consequently, in this case it is not necessary to carry out the step of central stripping the continuous tape 15' and it is sufficient to complete the step of lateral stripping along the lateral cutting lines 26 of the continuous tape 15'. Consequently, only two regular separate continuous bands 15" of plastic material film are obtained in this case that are superimposed on each other, which will be treated in the subsequent steps of the process according to the invention, analogous to the two pairs of bands 15" obtained with the abovementioned two wedge forming.

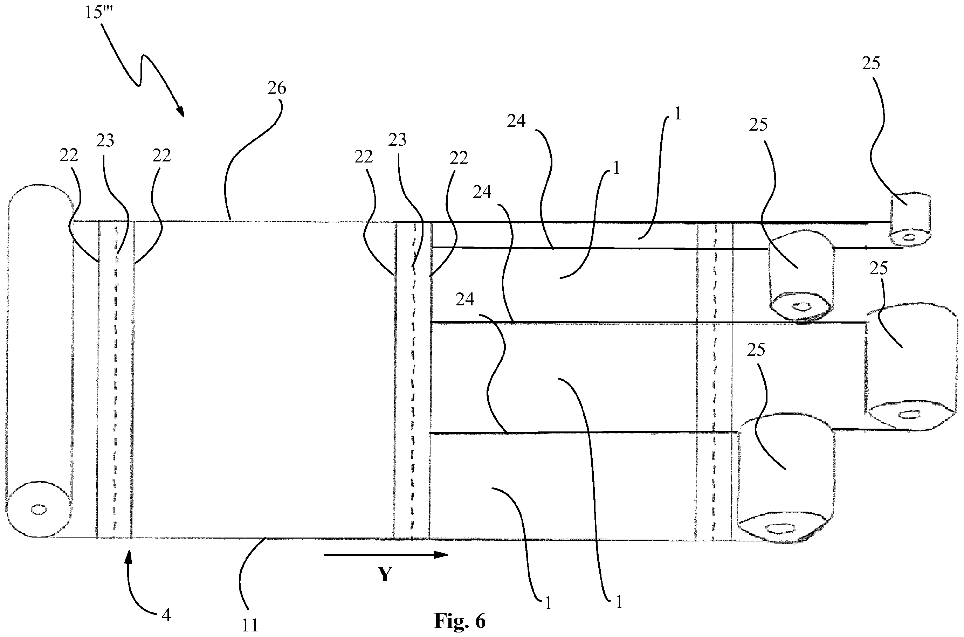

As can be appreciated from the enclosed figure 6, following the stripping steps, the manufacturing process provides for a transverse precutting step in which each pair of continuous and superimposed bands 15" is repeatedly precut at regular intervals in order to create parallel and spaced weakening lines 23 of the length of the annular elastic band 1 that one wishes to obtain.

Such precutting step is for example obtained by means of an operating head provided with a sawtooth blade which is repeatedly moved between an upper position, in which it does not interfere with the advancement of the continuous bands 15", and a lower position, in which the teeth of the blade at least partially penetrate into the continuous bands 15", attaining a continuous sequence of holes aligned transversely with respect to the advancement direction of the continuous bands 15" of plastic film.

Preferably, the continuous bands 15" of plastic film advance in Y direction with subsequent steps, being stopped at a provided precutting station equipped with the aforesaid head in order to allow the latter to cut by means of the blade without there being movement with respect to the continuous bands 15".

The process, object of the present invention, also provides for a welding step, which preferably takes place simultaneously with the precutting step, and in which the continuous coupled film bands 15" are joined together by means of weld lines 22, which are also transverse with respect to the advancement direction Y of the film. Preferably the welding step provides for the repeated making of pairs of parallel weld lines 22 arranged on opposite sides of each weakening line 23, which therefore remain interposed between the two weld lines of each pair of welds.

Correspondingly, the abovementioned operating head carries, mounted thereon, two welding bars with sawtooth blade interposed in order to carry out the precutting step and the welding step simultaneously.

In such a manner, a continuous tape of elastic bands 15'" comes to be formed, with annular shape and made of plastic material. Such bands are joined together by weakening lines 23, and each band is composed of two elongated tape-like bands 2, 3 constrained together by means of the aforesaid linear welds 22 obtained in pairs at the ends of the bands, and with the weakening line 23 interposed.

With the term bands 2, 3, in accordance with that indicated above, it must therefore be intended a section of continuous band 15" of plastic film delimited between two weakening lines 23.

Each annular elastic band 1 is mechanically connected in succession both to the preceding band and to the subsequent band by means of the weakening lines 23, by means of which it can be separated from the others for its normal use. Due to such weakening lines 23, the user can draw the single annular elastic band, separating it from the remaining subsequent bands.

The annular elastic bands 1 thus formed are nevertheless excessively wide for normal uses, since in accordance with the conventional bubble co-extrusion plants, they initiated from a tubular film 15 with diameter overly wide for generating only one succession of successive elastic bands 1.

A cutting step is therefore preferably provided after the welding step, in which such continuous tape of annular elastic bands 15'" is longitudinally divided along one or more longitudinal cutting lines 24 made parallel to the advancement direction Y of the same tape 15'".

Such step leads to the division of the continuous tape of annular elastic bands 15'" into annular elastic bands 1 having desired width, as illustrated in figure 6, in which four annular elastic bands 15'" with different widths were assumed. Such expedient is aimed for producing annular elastic bands 1 of predefined width as a function of the specific application needs, i.e. as a function of the characteristics of the products which the annular elastic bands 1 are intended to retain.

Finally, a winding step preferably takes place, in which the annular elastic bands 1 produced with the above-described manufacturing process, and mechanically connected in succession one after the other due to the weakening lines 23, are advantageously wound in rolls 25, which represent the finished product.

According to a particularly advantageous characteristic of the invention, the provided use of the first plastic material for the external layer 9 of the plastic film 15 allows a facilitated handling of the same plastic film in all steps of the production process, without the same film adhering to the rollers, to the supports and to the further provided equipment, due to the low adhesiveness characteristics of such material. And such characteristics are maintained even at the high temperatures provided by the work steps. On the other hand, the adhesion of the two substrates 10' which thus come to form a single internal layer 10 allows considerably increasing the mechanical characteristics of the annular band 1 thus attained.

The annular elastic band 1 and the manufacturing process thus conceived therefore attain the pre-established objects.

Of course, in the manufacturing and/or implementation thereof, they can also assume shapes and configurations that are different from that illustrated above, without departing from the present protective scope as defined by the claims.

In addition, all details can be substituted by technically equivalent elements and the size, shapes and materials used can be of any type as required.

**Table A**

| Collapsed Internal Layers | Longitudinal Traction | | | | | Perforation | | | | Elastic Memory | |
|---|---|---|---|---|---|---|---|---|---|---|---|
| Thickness [µm] | Maximum Traction at Break [N/mm²] | Maximum Traction at Yield [N/mm²] | Maximum Elongation [%] | Rigidity [N/mm²] | Maximum Force at Tearing [gf] | Maximum Force [N/mm] | Maximum Force at Break [N/mm] | Maximum movement [mm] | Energy at Break [J] | Elastic Recovery with 90% Elongation [%] | Elastic Recovery with 190% Elongation [%] |
| 40 | 25.9 | 7.61 | 270 | 167 | 40 | 734 | 711 | 67.38 | 1.23 | 67 | 51 |
| 80 | 32.6 | 7.32 | 450 | 155 | 235.2 | 624 | 534 | 67.73 | 2.35 | 68 | 53 |

**Table B**

| Non-Collapsed Internal Layers | Longitudinal Traction | | | | | Perforation | | | | Elastic Memory | |
|---|---|---|---|---|---|---|---|---|---|---|---|
| Thickness [µm] | Maximum Traction at Break [N/mm2] | Maximum Traction at Yield [N/mm2] | Maximum Elongation [%] | Rigidity [N/mm²] | Maximum Force at Tearing [gf] | Maximum Force [N/mm²] | Maximum Force at Break [N/mm] | Maximum movement [mm] | Energy at Break [J] | Elastic Recovery with 90% Elongation [%] | Elastic Recovery with 190% Elongation [%] |
| 40 | 24.8 | 6.9 | 420 | 162 | 52 | 570 | 549 | 59 | 0.926 | 68 | 54 |
| 80 | 32.3 | 7.03 | 520 | 159 | | | | | 2.35 | 68 | 54 |

## Claims

1. Annular elastic band (1) for retaining objects, which is constituted by a film of plastic material with ring-like extension and with thickness comprised between 6 µm and 300 µm, said annular elastic band (1) being composed of:
- at least two elongated tape-like bands (2, 3), each of which equipped at its ends with junction flaps (27, 28) which are superimposed on the junction flaps (27, 28) of the other band (2, 3);
- fixing means (4) for fixing together said superimposed junction flaps (27, 28);
said annular elastic band (1) being **characterized in that** each tape-like band (2, 3) comprises:
- at least two external layers (9) composed of a first extrudable plastic material;
- at least one internal layer (10) composed of a second extrudable plastic material, interposed between said at least two external layers (9) and composed of at least two internal substrates (10') that are superimposed and closely joined together via adhesion by means of penetration of polymer chains of each said substrate (10') in the other substrate (10').

2. Annular elastic band (1) for retaining objects according to claim 1, **characterized in that** said joining via adhesion between said substrates (10') is of the type via collapse with hot compression.

3. Annular elastic band (1) for retaining objects according to claim 1 **characterized in that** said at least two external layers (9) of each said band (2, 3) are made of a plastic material, in particular a polymer material catalyzed by a metallocene, in particular polyethylene catalyzed by a metallocene.

4. Annular elastic band (1) for retaining objects according to any one of the preceding claims **characterized in that** said fixing means (4) comprise at least one weld (22) at said superimposed flaps (2, 3).

5. Annular elastic band (1) for retaining objects according to claim 1 **characterized in that** said at least one internal layer (10) of each said band (2, 3) is made of one or more of the materials of the group comprising:
- polyolefins;
- polyurethanes;
- esters deriving from acrylic acid;
- copolymers, in particular comprising at least one polyolefin;
- copolymers, in particular comprising esters deriving from acrylic acid;
- copolymers, in particular comprising at least one polystyrene;
- copolymers, in particular comprising at least one butadiene.

6. Annular elastic band (1) for retaining objects according to any one of the preceding claims **characterized in that** said junction flaps (27, 28) of said bands (2, 3) are extended for a section of 1-40 millimeters.

7. Annular elastic band (1) for retaining objects according to claim 1 **characterized in that** it is connected in succession to a plurality of other elastic bands (1) by means of weakening lines (23).

8. Process for making an annular elastic band (1) which comprises at least one step of bubble extrusion of at least one plastic material with generation of a continuous film (15) advancing in tubular form, composed of at least one external layer (9) made of a first plastic material and of at least one substrate layer (10') made of a second polymer material, said process being **characterized in that** it comprises:
- at least one forming step, wherein said continuous film in tubular form (15) is deformed by means of interception of at least one forming wedge (18) in a continuous shaped film having at least one concavity (19) delimited by at least two bends (29) and provided with a middle vertex (31) of the same concavity (19);
- at least one flattening step, wherein said continuous shaped film (15) with said concavity is deformed into a continuous flattened tape form (15') comprising at least two superimposed parallel continuous strips (21) delimited by said bends (29) and by the middle vertex (31) of said concavity (19); during said flattening step, a hot compression occurs of the internal substrates (10') of each said strip, with collapse on each other via penetration of the polymer chains of each said substrate (10') into the polymer chains of the other substrate (10'), achieving a single internal layer (10) composed of said internal substrates (10') closely adhering to each other; each said strip (21) thus being composed of two said external layers (9) and of one said internal layer (10') composed of the adhesion via collapse of said two internal substrates (10');
- at least one step of lateral stripping said continuous tape (15') along at least two lateral cutting lines (26) in order to form continuous, separate, parallel bands (15") that are superimposed on each other;
- a welding step, wherein said superimposed continuous bands (15") are repeatedly joined together at junction flaps (27, 28) provided at regular distances along the advancement direction of said continuous bands (15") by means of weld lines transverse to said advancement; said superimposed continuous bands joined by said weld lines at regular intervals being divisible with cuts outside said transverse weld lines in order to form said annular elastic bands (1).

9. Process for making an annular elastic band (1) according to claim 8, which is **characterized in that** it comprises at least one precutting step adapted to form weakening lines (23) that are transverse with respect to the advancement direction of said continuous bands (15") at said superimposed junction flaps, each pair of continuous bands (15'") defining, between pairs of weakening lines, annular elastic bands (1).

10. Process for making an annular elastic band (1) according to claim 8, which is **characterized in that** said welding step attains pairs of weld lines (22) on the superimposed junction flaps (27, 28), each weakening line (23) being interposed between the weld lines (22) of a corresponding pair of weld lines (22).

11. Process for making an annular elastic band (1) according to claim 8, which is **characterized in that** it comprises at least one cutting step carried out along longitudinal cutting lines (24) parallel to the advancement direction of said continuous tape of annular elastic bands (15"') in order to separate it into continuous tapes of annular elastic bands of limited width.

12. Process for making an annular elastic band (1) according to claim 8, which is **characterized in that**:
- said forming step employs two forming wedges (18) for deforming said continuous film in tubular form (15) into a continuous shaped film having two opposite concavities (19) delimited by two bends (29) for each side and each provided with a middle vertex (31);
- said flattening step deforms said continuous shaped film (15) with said two concavities into the form of a continuous flattened tape (15') comprising four parallel continuous strips (21), two-by-two superimposed, laterally delimited by said bends (29) and by the middle vertices (31) of said concavities (19) and defining a configuration having a section with substantially H-shaped form;
- a central stripping step being provided, wherein said flattened tubular film in tape form (15') is cut at its middle axis along two first cutting lines (11), in a manner so as to separate a central scrap (33) from the four continuous strips (21), two-by-two superimposed.

## Patentansprüche

1. Ringförmiges elastisches Band (1) zum Halten von Gegenständen, bestehend aus einer Kunststofffolie mit ringähnlicher Ausdehnung und einer Stärke zwischen 6 µm und 300 µm, wobei das genannte elastische Band (1) aus Folgendem besteht:
- mindestens zwei länglichen streifenförmige Bändern (2, 3), von denen jedes an seinen Enden mit Verbindungslaschen (27, 28) ausgestattet ist, die die Verbindungslaschen (27, 28) des anderen Bands (2, 3) überlagern;
- Befestigungsmitteln (4) zum Befestigen der genannten überlagerten Verbindungslaschen (27, 28) aneinander;
wobei das genannte ringförmige elastische Band (1) **dadurch gekennzeichnet ist, dass** jedes streifenförmige Band (2, 3) Folgendes umfasst:
- mindestens zwei aus einem ersten extrudierbaren Kunststoff bestehende äußere Schichten (9);
- mindestens eine aus einem zweiten extrudierbaren Kunststoff bestehende innere Schicht (10),
eingefügt zwischen die genannten mindestens zwei äußeren Schichten (9) und bestehend aus mindestens zwei inneren Substraten (10'), die überlagert und durch Haftung mittels des Eindringens von Polymerketten eines jeden der genannten Substrate (10') in das andere fest miteinander verbunden sind.

2. Ringförmiges elastisches Band (1) zum Halten von Gegenständen nach Anspruch 1, **dadurch gekennzeichnet, dass** die genannte Verbindung mittels Haftung der genannten Substrate (10') aneinander dem Typ durch Schrumpfung mittels Heißprägung entspricht.

3. Ringförmiges elastisches Band (1) zum Halten von Gegenständen nach Anspruch 1, **dadurch gekennzeichnet, dass** die genannten mindestens zwei äußeren Schichten (9) jedes genannten Bandes (2, 3) aus Kunststoff hergestellt sind, insbesondere aus einem durch ein Metallocen katalysierten Polymerwerkstoff, insbesondere durch ein Metallocen katalysiertes Polyethylen.

4. Ringförmiges elastisches Band (1) zum Halten von Gegenständen nach einem beliebigen der vorangegangenen Ansprüche, **dadurch gekennzeichnet, dass** die genannten Befestigungsmittel (4) mindestens eine Schweißung (22) an den genannten überlagerten Laschen (2, 3) aufweisen.

5. Ringförmiges elastisches Band (1) zum Halten von Gegenständen nach Anspruch 1, **dadurch gekennzeichnet, dass** die genannte mindestens eine innere Schicht (10) jedes genannten Bandes (2, 3) aus einem oder mehreren der Werkstoffe der folgenden Gruppe bestehen:
- Polyolefine;
- Polyurethane;
- Acrylsäureester;
- Copolymere, insbesondere umfassend mindestens ein Polyolefin;
- Copolymere, insbesondere umfassend Acrylsäureester;
- Copolymere, insbesondere umfassend mindestens ein Polystyrol;
- Copolymere, insbesondere umfassend mindestens ein Butadien.

6. Ringförmiges elastisches Band (1) zum Halten von Gegenständen nach einem beliebigen der vorangegangenen Ansprüche, **dadurch gekennzeichnet, dass** die genannten Verbindungslaschen (27, 28) der genannten Bänder (2, 3) über einen Abschnitt von 1 - 40 Millimeter verlaufen.

7. Ringförmiges elastisches Band (1) zum Halten von Gegenständen nach Anspruch 1, **dadurch gekennzeichnet, dass** es mittels Schwächungslinien (23) in Folge mit einer Vielzahl anderer elastischer Bänder (1) verbunden ist.

8. Verfahren zur Herstellung eines ringförmigen elastischen Bands (1), das mindestens einen Schritt zur Blasfolienextrusion mindestens eines Kunststoffs unter Bildung einer in Schlauchform beförderten durchgehenden Folie (15) umfasst, die aus mindestens einer äußeren Schicht (9) aus einem ersten Kunststoff und mindestens einer Substratschicht (10') aus einem zweiten Polymerwerkstoff besteht, wobei das genannte Verfahren **dadurch gekennzeichnet ist, dass** es Folgendes umfasst:
- mindestens einen Formschritt, bei dem die genannte durchgehende Folie in Schlauchform (15) mittels des Einsatzes mindestens eines Formkeils (18) in eine durchgehend geformte Folie mit mindestens einer von mindestens zwei Biegungen (29) begrenzten und mit einem mittleren Scheitelpunkt (31) dieser Konkavität versehenen Konkavität (19) verformt wird;
- mindestens einen Abflachungsschritt, bei dem die genannte durchgehend geformte Folie (15) mit der genannten Konkavität in eine durchgehende Bandform (15') verformt wird, die mindestens zwei von den genannten Biegungen (29) und dem mittleren Scheitelpunkt (31) der genannten Konkavität (19) überlagerte, parallele durchgehende Streifen (21) umfasst; wobei während des genannten Abflachungsschritts eine Heißprägung auf den inneren Substraten (10') jedes genannten Streifens erfolgt, die durch Eindringen der Polymerketen jedes genannten Substrats (10') in die Polymerketten des anderen Substrats (10') aufeinander geschrumpft werden und so eine aus den fest aneinander haftenden genannten inneren Substraten (10') bestehende einzige innere Schicht (10) ergeben; wobei jeder genannte Streifen (21) so aus zwei genannten äußeren Schichten (9) und einer aus der Haftung durch Schrumpfung der genannten beiden inneren Substrate (10') bestehenden genannten inneren Schicht (10') besteht;
- mindestens einen Schritt des seitlichen Abstreifens des genannten kontinuierlichen Bandes (15') entlang mindestens zwei seitlicher Schneidlinien (26), um getrennte, parallele kontinuierliche Bänder (15") zu bilden, die einander überlagern;
- einen Schweißschritt, bei dem die genannten überlagerten durchgehenden Bänder (15") wiederholt an Verbindungslaschen (27, 28) miteinander verbunden werden, die in regelmäßigen Abständen entlang der Beförderungsrichtung der genannten durchgehenden Bänder (15") mittels Schweißlinien quer zu der genannten Beförderung bereitgestellt werden; wobei die in regelmäßigen Abständen von den genannten Schweißlinien verbundenen genannten überlagerten durchgehenden Bänder durch Schnitte außerhalb der genannten Querschweißlinien trennbar sind, um die genannten ringförmigen elastischen Bänder (1) zu bilden.

9. Verfahren zur Herstellung eines ringförmigen elastischen Bands (1) nach Anspruch 8, **dadurch gekennzeichnet, dass** es mindestens einen zum Bilden von Schwächungslinien (23) geeigneten Vorschneideschritt umfasst, die im Verhältnis zur Beförderungsrichtung der genannten durchgehenden Bänder (15") an den genannten überlagerten Laschen quer verlaufen, wobei jedes Paar durchgehender Bänder (15"') zwischen Schwächungslinienpaaren ringförmige elastische Bänder (1) definiert.

10. Verfahren zur Herstellung eines ringförmigen elastischen Bands (1) nach Schritt 8, **dadurch gekennzeichnet, dass** der genannte Schweißschritt Schweißlinienpaare (22) auf den überlagerten Verbindungslaschen (27, 28) ergibt, wobei jede Schwächungslinie (23) zwischen den Schweißlinien (22) eines entsprechend Paars Schweißlinien (22) eingefügt wird.

11. Verfahren zur Herstellung eines ringförmigen elastischen Bands (1) nach Anspruch 8, **dadurch gekennzeichnet, dass** es mindestens einen entlang längs verlaufender Schneidlinien (24) parallel zur Beförderungsrichtung des genannten durchgehenden Bands ringförmiger elastischer Bänder (15"') ausgeführten Schneidschritt umfasst, um es in durchgehende Bänder ringförmiger elastischer Bänder begrenzter Breite zu unterteilen.

12. Verfahren zur Herstellung eines ringförmigen elastischen Bands (1) nach Anspruch 8, **dadurch gekennzeichnet, dass**:
- der genannte Formschritt zwei Formkeile (18) zum Verformen der genannten durchgehenden Folie in Schlauchform (15) in eine durchgehend geformte Folie mit zwei von zwei Biegungen (29) pro Seite begrenzten und mit einem mittleren Scheitelpunkt (31) versehenen gegenüberliegenden Konkavitäten (19) verformt;
- wobei der genannte Abflachungsschritt die genannte durchgehend geformte Folie (15) mit den genannten zwei Konkavitäten in die Form eines durchgehenden abgeflachten Bands (15') verformt, das vier jeweils paarweise überlagerte, seitlich von den genannten Biegungen (29) und den mittleren Scheitelpunkten (31) der genannten Konkavitäten (19) begrenzte parallele durchgehende Streifen (21) umfasst und eine Konfiguration mit einem im Wesentlichen h-förmigen Querschnitt definiert;
- ein zentraler Abstreifschritt erfolgt, bei dem die genannte abgeflachte schlauchförmige Folie in Streifenform (15') an ihrer mittleren Achse entlang zwei erster Schnittlinien (11) so zugeschnitten wird, dass ein mittleres Stück (33) aus den vier paarweise überlagerten durchgehenden Streifen (21) abgetrennt wird.

## Revendications

1. Bande élastique annulaire (1) permettant de retenir des objets, constituée d'un film en matière plastique en forme d'anneau et ayant une épaisseur située dans l'intervalle allant de 6 µm à 300 µm, ladite bande élastique annulaire (1) étant composée de :
- au moins deux bandes allongées de type ruban (2, 3), chacune étant munie à ses extrémités de pattes de jonction (27, 28) superposées aux pattes de jonction (27, 28) de l'autre bande (2, 3) ;
- des moyens de fixation (4) pour fixer l'une à l'autre les pattes de jonction (27, 28) superposées ;
ladite bande élastique annulaire (1) étant **caractérisée en ce que** chaque bande de type ruban (2, 3) comprend :
- au moins deux couches externes (9) composées d'une première matière plastique extrudable ;
- au moins une couche interne (10) composée d'une deuxième matière plastique extrudable, interposée entre lesdites au moins deux couches externes (9) et composée d'au moins deux substrats internes (10') qui sont superposés et joints intimement par adhésion grâce à la pénétration des chaines polymères de chaque substrat (10') dans l'autre substrat (10').

2. Bande élastique annulaire (1) permettant de retenir des objets selon la revendication 1, **caractérisée en ce que** ladite jonction par adhésion entre les deux substrats (10') est du type écrasement par compression à chaud.

3. Bande élastique annulaire (1) permettant de retenir des objets selon la revendication 1, **caractérisée en ce que** lesdites au moins deux couches externes (9) de chacune desdites bandes (2, 3) sont composées d'une matière plastique, en particulier une matière polymère catalysée par un métallocène, en particulier un polyéthylène catalysé par un métallocène.

4. Bande élastique annulaire (1) permettant de retenir des objets selon l'une quelconque des revendications précédentes, **caractérisée en ce que** lesdits moyens de fixation (4) comprennent au moins une soudure (22) sur lesdites pattes superposées (2, 3).

5. Bande élastique annulaire (1) permettant de retenir des objets selon la revendication 1, **caractérisée en ce que** ladite au moins une couche interne (10) de chacune desdites bandes (2, 3) est composée d'une ou de plusieurs des matières du groupe comprenant :
- des polyoléfines ;
- des polyuréthannes ;
- des esters dérivant de l'acide acrylique ;
- des copolymères, en particulier comprenant au moins une polyoléfine ;
- des copolymères, en particulier comprenant des esters dérivant de l'acide acrylique ;
- des copolymères, en particulier comprenant au moins un polystyrène ;
- des copolymères, en particulier comprenant au moins un butadiène.

6. Bande élastique annulaire (1) permettant de retenir des objets selon l'une quelconque des revendications précédentes, **caractérisée en ce que** lesdites pattes de jonction (27, 28) desdites bandes (2, 3) s'étendent sur un segment de 1 à 40 millimètres.

7. Bande élastique annulaire (1) permettant de retenir des objets selon la revendication 1, **caractérisée en ce qu'**elle est connectée successivement à une série d'autres bandes élastiques (1) au moyen de lignes de rupture (23).

8. Procédé de production d'une bande élastique annulaire (1), qui comprend au moins une étape d'extrusion-gonflage d'au moins une matière plastique pour générer un film continu (15) progressant sous forme tubulaire, composé d'au moins une couche externe (9) composée d'une première matière plastique et d'au moins une couche de substrat (10') composée d'une deuxième matière polymère, ledit procédé étant **caractérisé en ce qu'**il comprend :
- au moins une étape de mise en forme, où ledit film continu sous forme tubulaire (15) est déformé par insertion d'au moins un coin de mise en forme (18) en un film moulé de manière continue, ayant au moins une concavité (19) délimitée par au moins deux plis (29) et muni d'un sommet central (31) de la même concavité (19) ;
- au moins une étape d'aplatissement, où ledit film moulé de manière continue (15) avec ladite concavité est déformé en forme de ruban aplati continu (15') comprenant au moins deux rubans continus parallèles superposés (21) délimitées par lesdits plis (29) et par le somment central (31) de ladite concavité (19) ; pendant ladite étape d'aplatissement, une compression à chaud est exercée sur les substrats internes (10') de chaque ruban, avec écrasement l'un sur l'autre et pénétration des chaines polymères de chaque substrat (10') dans les chaines polymères de l'autre substrat (10'), pour obtenir une seule couche interne (10) composée desdits substrats internes (10') adhérant intimement l'un à l'autre ; chacun des rubans (21) étant ainsi composé des deux couches externes (9) et d'une couche interne (10') composée de l'adhésion par écrasement desdites deux substrats internes (10') ;
- au moins une étape de découpe latérale dudit ruban continu (15') le long d'au moins deux lignes de découpe latérales (26) pour former des bandes parallèles, continues, distinctes (15") qui sont superposées l'une sur l'autre ;
- une étape de soudage, où lesdites bandes continues superposées (15") sont jointes l'une à l'autre à plusieurs reprises au niveau des pattes de jonction (27, 28) prévues à distances régulières dans la direction d'avancement desdites bandes continues (15") au moyen de lignes de soudure transversales par rapport audit avancement ; lesdites bandes superposées continues, jointes par lesdites lignes de soudure à intervalles réguliers, pouvant être divisées par des découpes à l'extérieur desdites lignes de soudure transversales pour former lesdites bandes élastiques annulaires (1).

9. Procédé de production d'une bande élastique annulaire (1) selon la revendication 8, **caractérisé en ce qu'**il comprend au moins une étape de prédécoupe destinée à former des lignes de rupture (23), transversales par rapport à la direction d'avancement desdites bandes continues (15") au niveau desdites pattes de jonction superposées, chaque paire de bandes continues (15'") définissant, entre les paires de lignes de rupture, les bandes élastiques annulaires (1).

10. Procédé de production d'une bande élastique annulaire (1) selon la revendication 8, **caractérisé en ce que** ladite étape de soudage affecte les paires de lignes de soudure (22) sur les pattes de jonction superposées (27, 28), chaque ligne de rupture (23) étant interposée entre les lignes de soudure (22) d'une paire respective de lignes de soudure (22).

11. Procédé de production d'une bande élastique annulaire (1) selon la revendication 8, **caractérisé en ce qu'**il comprend au moins une étape de découpe effectuée le long des lignes de découpe longitudinales (24), parallèles à la direction d'avancement dudit ruban continu des bandes élastiques annulaires (15'") afin de le séparer en rubans continus de bandes élastiques annulaires de largeur limitée.

12. Procédé de production d'une bande élastique annulaire (1) selon la revendication 8, **caractérisé en ce que** :
- ladite étape de mise en forme utilise deux coins de mise en forme (18) pour déformer ledit film continu de forme tubulaire (15) en un film moulé continu ayant deux concavités opposées (19) délimitées par deux plis (29) pour chaque côté et munies chacune d'un somment central (31) ;
- ladite étape d'aplatissement déforme ledit film moulé continu (15) avec lesdites deux concavités en un ruban aplati continu (15') comprenant quatre rubans continus parallèles (21), superposés deux par deux, délimités latéralement par lesdits plis (29) et par les sommets centraux (31) desdites concavités (19) et définissant une configuration ayant une section sensiblement en forme de H ;
- une étape de découpe centrale étant prévue, où ledit film tubulaire aplati en forme de ruban (15') est découpé au niveau de son axe central le long des deux premières lignes de découpe (11), de manière à séparer un morceau central (33) des quatre rubans continus (21), superposés deux par deux.
